# EUROPEAN PATENT APPLICATION

(11) **EP 1 562 283 A1**
(43) Date of publication of application: **10.08.2005**
(21) Application number: 05002158.3
(22) Date of filing: 02.02.2005
(51) Int. Cl.: H02P 21/00

(54) **Servomotor control device for robot and robot having the device**

(30) Priority: 03.02.2004 JP 2004026820
(71) Applicant: FANUC LTD, Minamitsuru-gun, Yamanashi 401-0597 (JP)
(72) Inventor: Matsubara, Shunsuke, 3603-7, Kodachi, Yamanashi 401-0302 (JP); Iwashita, Yasusuke, Fujiyoshida-shi, Yamanashi 403-0003 (JP); Kato, Tetsuaki, Hadono-shi, Kanagawa 259-1326 (JP)
(74) Representative: Schmidt, Steffen J., Dipl.-Ing.

(57) **Abstract**

A servomotor control device for a robot which can adjust the characteristics of maximum torque and/or continuous rated output of the servomotor and a robot with easy maintenance. The robot is commanded to execute one cycle of taught motion. During the cycle, a maximum torque required for the servomotor is calculated by a torque command or the like. When the maximum torque lacks, a field weakening current correction value is increased for increasing d-phase current and the maximum torque. Further, lack of continuous rated output may be judged by detected temperature of the servomotor. When a lack of continuous rated output occurs, the correction value is decreased to decrease the d-phase current so as to adjust the characteristic of continuous rated output. Although the servomotors have the same specification, the characteristic of each of the servomotors may be optimized corresponding to the axis by adjusting the field weakening current (or the d-phase current). As the hardware such as the control devices have the same specification, manufacture, maintenance and control of the robot may become easier.

## Description

### BACKGROUND OF THE INVENTION

### 1. Field of the Invention

The present invention relates to a control device of a servomotor driving each of the axes of a robot and a robot having the control device.

### 2. Description of the Related Art

In general, a permanent magnet type synchronous motor is used as a servomotor for driving each of the axes of a robot. As a synchronous motor may generate a counter electromotive force in proportion to a rotational speed, a field weakening control method for electrically canceling an effect of the counter electromotive force is used. In the field weakening control, reactive current which has no effect on a torque of the motor during high-speed rotation is generated so as to improving a maximum torque characteristic at a high rotational speed.

For example, a field weakening control is disclosed in Japanese Patent Application Unexamined Publication No. 2003-52199, in which a d-phase current command value for keeping a terminal voltage of a motor at a maximum load less than a maximum output voltage of a motor control device and, a d-phase current command value for keeping the terminal voltage of the motor at no load or a minimum load less than the maximum output voltage of the motor control device are calculated, corresponding to a rotational speed of the motor. A d-phase current command value corresponding to the motor load is calculated by interpolation of the d-phase current command values at the maximum load and the minimum load.

Another field weakening control is disclosed in Japanese Patent Application Unexamined Publication No. 8-275599, in which a maximum d-phase current value is calculated based on the difference between d-phase current values at a maximum load and at no load. The maximum d-phase current value multiplied by a function value including the rotational speed of the motor as a parameter is a controlled d-phase current value.

As described above, the field weakening control requires an actual current flow in a coil of the motor. Therefore, the motor may be heated by the current. In other words, a maximum torque characteristic of the motor at a high rotational speed may be improved by the field weakening control, however, a continuous output characteristic of the motor may deteriorate by the temperature rise of the motor.

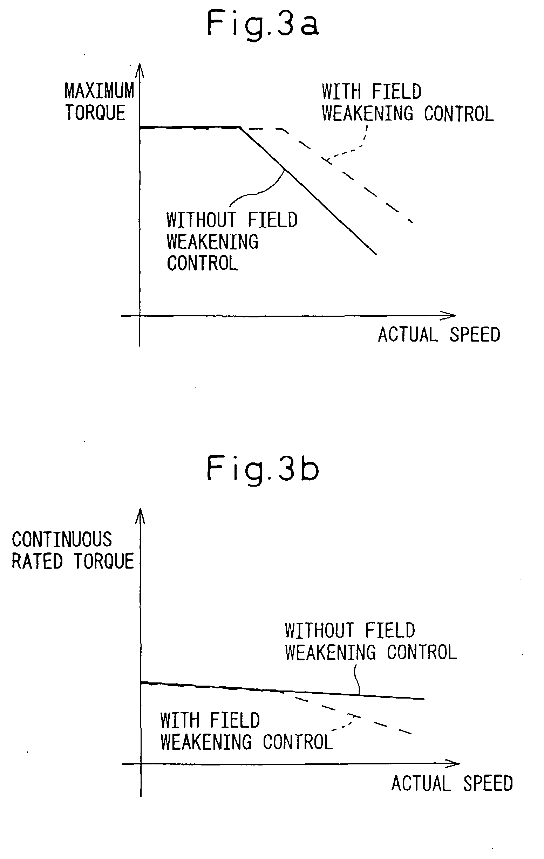

Fig. 3a shows maximum torque characteristics relative to an actual speed of the motor, with and without the field weakening control. Obviously, the maximum torque in high-speed area with the field weakening control is larger than that without the field weakening control. Further, Fig. 3b shows continuous rated torque characteristics relative to an actual speed of the motor, with and without the field weakening control. As shown, the continuous rated torque characteristic in high-speed area with the field weakening control is smaller than that without the field weakening control.

On the other hand, a robot has a plurality of articulated axes and a servomotor is used for driving each of the articulated axes. In relation to an axis on which gravity effects, the continuous rated output characteristic of the servomotor used for the robot is important. In relation to an axis on which gravity has no effect, it is preferable that the acceleration characteristic of the servomotor is improved so as to reduce cycle time of the action of the robot. To this end, in prior art, the servomotor having a suitable specification for the axis of the robot is used. In other words, the specification of the servomotor used for an axis may be different depending on which axis it is used.

When the specifications of the servomotors used for driving the axes of the robot are different to each other, equipments associated with the servomotors also must be different to each other. Therefore, it is inconvenient that maintenance for the servomotors and equipments is different. Further, maintenance for the robot may be complicated and bothersome.

### SUMMARY OF THE INVENTION

Accordingly, an object of the present invention is to provide a servomotor control device and a robot with easy maintenance. The control device may adjust the maximum torque and/or the continuous rated output of the servomotor such that the maximum torque and/or the continuous rated output are suitable for driving each of the axes of the robot.

According to one aspect of the present invention, there is provided a servomotor control device, the control device comprising: a current generating part generating field weakening current for canceling a counter electromotive force generated by the servomotor; a field weakening current adjusting part for adjusting the magnitude of the field weakening current generated by the current generating part.

The servomotor control device may further comprise a control part commanding the robot to execute one cycle of taught motion; and a lack of maximum torque judging part for judging lack of a maximum torque of the servomotor during the cycle. The field weakening current adjusting part may increase the field weakening current when the lack of maximum torque judging part judges that the lack of the maximum torque occurs.

The lack of maximum torque judging part may judge that the lack of the maximum torque occurs when a torque command value is equal to or more than a predetermined value.

Alternatively, the lack of maximum torque judging part may judge that the lack of the maximum torque occurs when a voltage command value outputted in a current control loop is equal to or more than a maximum voltage value supplied by an inverter.

Alternatively, the lack of maximum torque judging part may judge that the lack of the maximum torque occurs when the distance between a commanded position and an actual position of the servomotor is equal to or more than a predetermined length.

The servomotor control device may further comprise a control part commanding the robot to execute one cycle of taught motion; and a lack of continuous rated output judging part for judging lack of a continuous rated output of the servomotor during the cycle. The field weakening current adjusting part may decrease the field weakening current when the lack of continuous rated output judging part judges that the lack of the continuous rated output occurs.

The servomotor control device may further comprise a temperature sensor detecting temperature of the servomotor. The lack of continuous rated output judging part may judge that the lack of the continuous rated output occurs when an output value of the temperature sensor exceeds a predetermined value.

Alternatively, the lack of continuous rated output judging part may judge that the lack of the continuous rated output occurs when a mean squared value of actual current in servomotor exceeds a predetermined value.

The servomotor control device may further comprise a control part commanding the robot to execute one cycle of taught motion; and a margin calculating part for calculating a torque margin of the maximum torque of the servomotor and an output margin of the continuous output relative to a rated motor output during the cycle. The field weakening current adjusting part may increase the field weakening current when the torque margin calculated by the margin calculating part is small and may decrease the field weakening current when the output margin calculated by the margin calculating part is small, so as to optimize the field weakening current corresponding to the characteristic of the axes of the robot.

The margin calculating part may calculate the torque margin based on a maximum torque command value during motion of the servomotor relative to a torque limit value for limiting the torque command value.

Also, the margin calculating part may calculate the output margin based on a mean squared value of the torque values of the axes of the robot during motion of the servomotor relative to a rated torque of the servomotor.

According to another aspect of the present invention, there is provided a robot comprising servomotors as drive units for at least two axes of the robot, the servomotors having the same specification and being controlled by the above servomotor control device according to the invention.

### BRIEF DESCRIPTION OF THE DRAWINGS

The above and other objects, features and advantages of the present invention will be made more apparent by the following description of the preferred embodiments thereof, with reference to the accompanying drawings, wherein:
Figs. 1a and 1b are block diagrams showing one embodiment of the present invention;
Fig. 2 is a flowchart showing a process for calculating a correction value of a field weakening current in the embodiment;
Figs. 3a and 3b show maximum torque characteristics and continuous rated torque characteristics relative to an actual speed of the motor, with and without the field weakening control, respectively; and
Fig. 4 is a block configuration diagram showing a schematic configuration of the invention.

### DETAILED DESCRIPTION

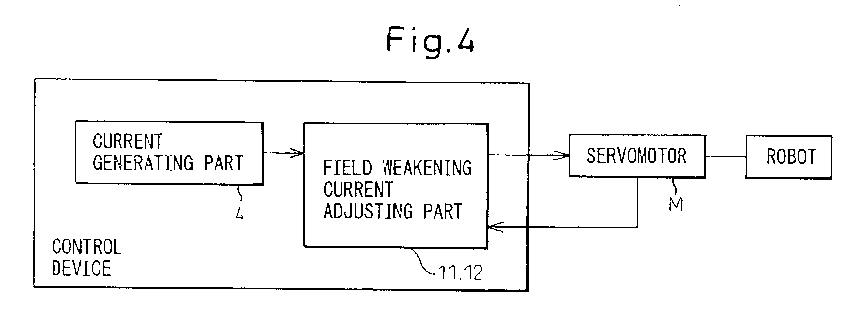

Fig. 4 is a block configuration diagram showing a schematic configuration of a servomotor control device for a robot according to the invention. The servomotor control device for controlling a servomotor M driving each of axes of the robot includes a current generating part or a current command generator 4 generating field weakening current for canceling a counter electromotive force generated by the servomotor; and a field weakening current adjusting part 11, 12 for adjusting the magnitude of the field weakening current generated by the current generating part 4.

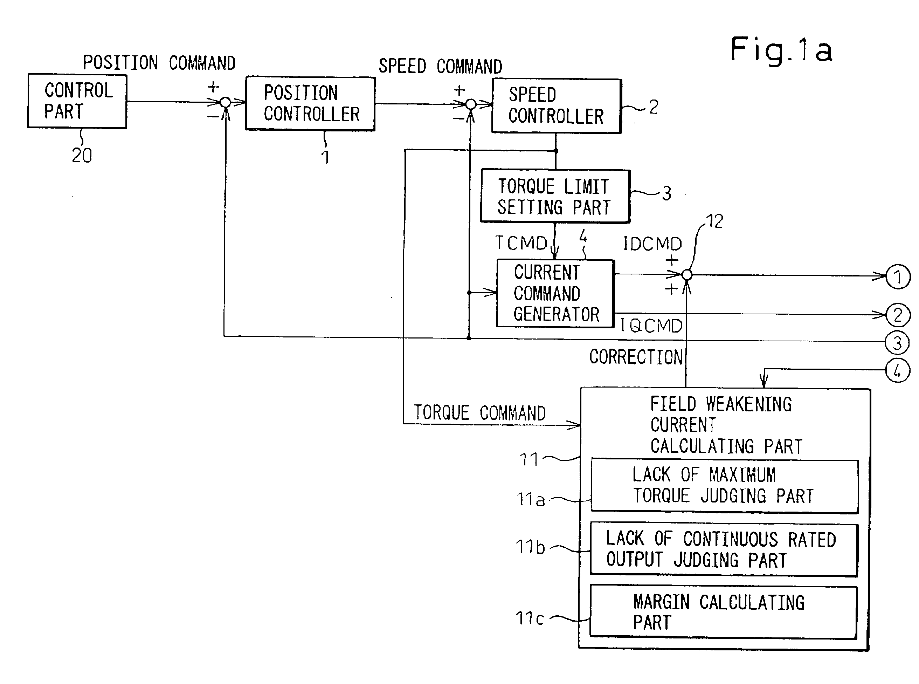

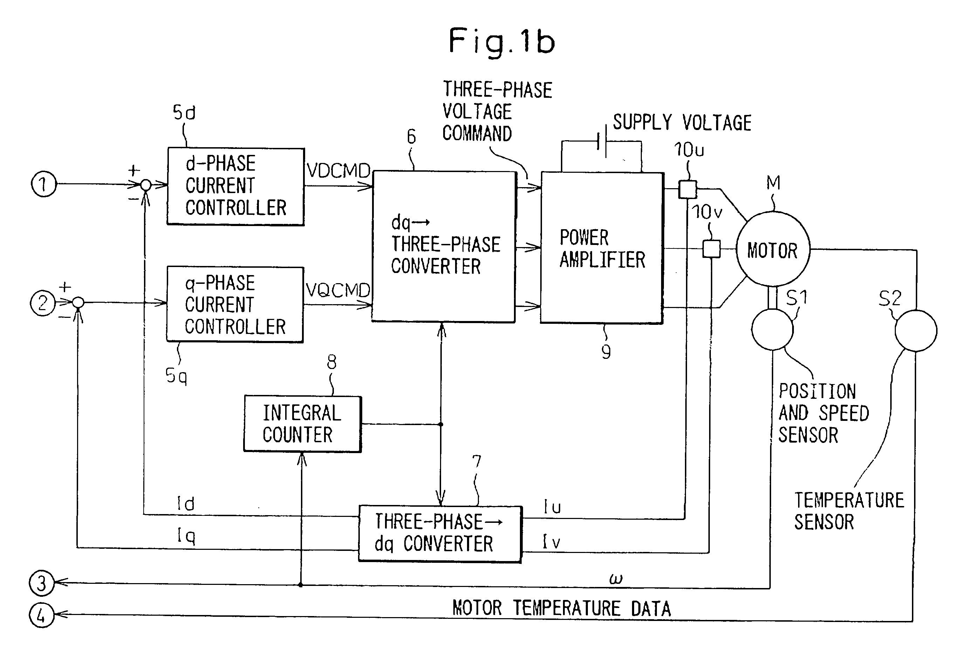

Figs. 1a and 1b are block diagrams showing the servomotor control device for the servomotor M according to one embodiment of the invention. An upstream control part or a controller 20 outputs a position command. A position error of the servomotor is calculated by subtracting a position feedback by a sensor S1, which detects the speed and the position of the servomotor M configured by a permanent magnet type synchronous motor, from the position command. A position controller 1 calculates a speed command by multiplying the position error by a position gain. A speed error may be calculated by subtracting a speed feedback ω by the sensor S1 from the speed command. A speed controller 2 calculates a torque command by executing a speed loop process such as proportional integral, based on the speed error. When the torque command is larger than a torque limit value determined by the specification of the servomotor M, a torque limit setting part 3 calculates a torque command T_{CMD} by subtracting the torque limit value determined by the torque command value and outputs the torque command T_{CMD} to a current command generator 4.

The current command generator or the current generating part 4 converts the torque command T_{CMD} to a q-phase current command I_{QCMD} and outputs a d-phase current command value I_{DCMD} set corresponding to the actual speed ω of the servomotor detected by speed feedback. The d-phase current command value I_{DCMD} is added to a correction value outputted by a field weakening current calculating part 11, as described below. Then, the corrected d-phase current command value is outputted to a loop process of d-phase current. In this embodiment, the field weakening current adjusting part of the invention is configured by the field weakening current calculating part 11 and an addition part 12 adding the correction value outputted by the field weakening current calculating part 11 to the d-phase current command value I_{DCMD} outputted by the current command generator 4.

Current errors of a d-phase and a q-phase are calculated by subtracting a d-phase and a q-phase feedback current values Id and Iq from the corrected d-phase current command value I_{DCMD} and the q-phase current command value I_{QCMD}, respectively. D-phase and q-phase current controllers 5d and 5q calculate d-phase and q-phase voltage command values V_{DCMD} and V_{QCMD,} respectively, based on the current errors. A converting part or a converter 6 capable of converting d-phase and q-phase voltage commands to three-phase voltage commands converts the d-phase and q-phase voltage command values V_{DCMD} and V_{QCMD} to three-phase (U, V, W) commands and, controls the servomotor M by the three-phase commands via a power amplifier 9.

Two-phase current of the three-phase current (currents Iu and Iv of U and V-phases in the embodiment shown in Figs. 1a and 1b) are detected by current detectors 10u and 10v. A converter 7 capable of converting three-phase current to d and q-phase current converts the currents Iu and Iv to the d and q-phase currents Id and Iq and, feedbacks the currents. A numeral 8 denotes an integral counter for detecting the rotational position of a rotor of the servomotor M based on a signal from the sensor S1. The rotational position of the rotor is detected by the counter 8 and is outputted to the converters 6 and 7. The above constitution may be the same as a conventional motor control device capable of controlling by d-q converting. In the present invention, it is characterized that the control device has the field weakening current calculating part 11 for calculating the correction value of the field weakening current and has the addition part 12 for adding the correction value to the d-phase current command value I_{DCMD} outputted by the current command generator 4, whereby the d-phase current command value added to the correction value may be the d-phase command value for the d-phase current controller 5d. In addition, the process indicated by the block diagram of Figs. 1a and 1b may be executed by a processor or by a digital servo processing, as in a conventional process.

In the invention, the servomotor controlled by the servomotor control device having the field weakening current calculating part 11 as shown in Fig. 1a is used for driving each axis of the robot. The robot is commanded to execute one cycle (of repeatedly executed cycles) of taught motion. The field weakening current calculating part 11 of the invention may adjust the correction value of the field weakening current based on the magnitude of the maximum torque of the continuous rated output during the cycle, so as to adjust the d-phase current command. When it is judged that the torque which the servomotor can output lacks relative to a required maximum torque after the robot executes the one cycle of taught motion, the field weakening calculating part 11 may increase the correction value of field weakening current for increasing the d-phase current command value and the output torque of the servomotor. On the other hand, when it is judged that the lack of the continuous rated output occurs, the field weakening calculating part 11 may decrease the correction value of field weakening current for decreasing the d-phase current command value. The above judgment may be carried out by, for example, a lack of maximum torque judging part 11a of the field weakening calculating part 11.

The judgment whether the torque which the servomotor can output lacks relative to the required maximum torque or not may be carried out by some component of the control device. For example, the lack of the maximum torque may be judged depending on whether the torque command value outputted by the speed controller 2 reaches to a maximum value of the torque command, i.e., whether the torque command value exceeds the torque limit value set by the torque limit setting part 3.

The lack of the maximum torque may also be judged when a compositional vector of the d-phase and the q-phase voltage command value V_{DCMD} and V_{QCMD} of the d-phase and q-phase current controllers 5d and 5q exceeds a clamp value (or a predetermined maximum value), otherwise, when a compositional voltage of the three-phase of voltage U, V, W outputted by the converter 6 converting the d, q-phase voltage command to the three-phase voltage command reaches to a maximum voltage supplied by an inverter of the power amplifier 9.

Further, the lack of the maximum torque may also be judged when a position error of the servomotor or the distance between the command position and the actual position detected by the sensor S1 exceeds a predetermined value.

The judgment whether the lack of the continuous rated output occurs or not may be carried out by a lack of continuous rated output judging part 11b of the field wakening current calculating part 11, which may judge the lack of the continuous rated output when the temperature of the servomotor M detected by a temperature sensor S2 attached to the servomotor exceeds a predetermined temperature value. Alternatively, the lack of the continuous rated output may be judged when a mean squared value of the actual U-phase and V-phase current values detected by the current detector 10u and 10v and the actual W-phase current value calculated based on the actual U-phase and V-phase current values is equal to a predetermined current value.

In the embodiment shown in Figs. 1a and 1b, a lack of the maximum torque and of the continuous rated output are judged by the torque command value and the detected temperature by means of the sensor S2 for detecting the temperature of the servomotor M, respectively.

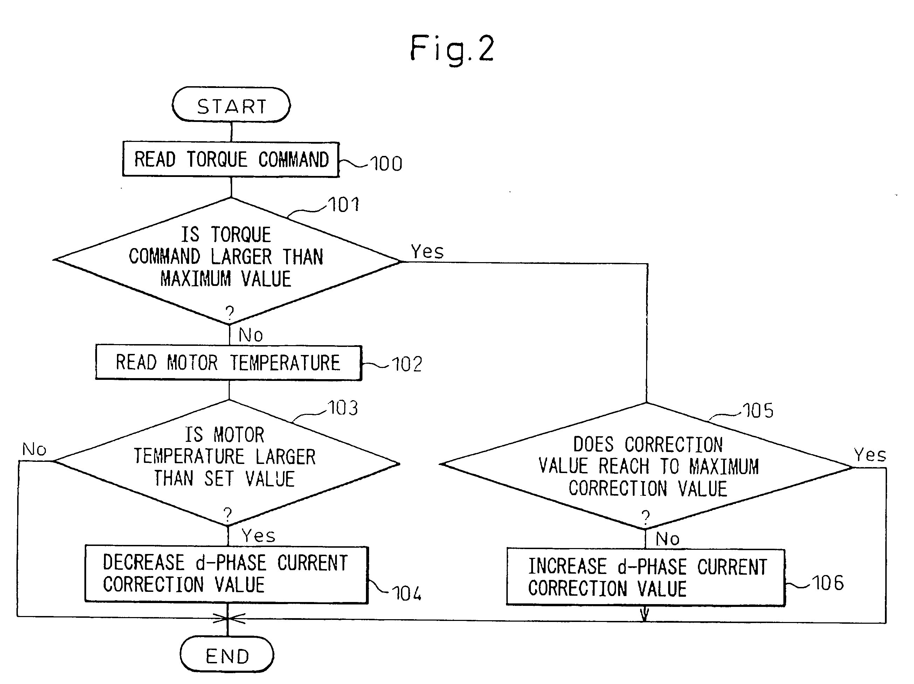

Fig. 2 shows a flowchart of a process executed by a processor as the field weakening current calculating part 11 of the servomotor control device. This process is repeatedly executed in a predetermined cycle.

First, the processor reads the torque command calculated by the speed controller 2 (Step 100) and judges whether the torque command value exceeds a set maximum value, in other words, the lack of the maximum torque occurs (Step 101). When the torque command value does not exceeds the set maximum value, the processor reads the detected temperature value from the temperature sensor S2 (Step 102) and judges whether the detected temperature exceeds a set temperature value or not (Step 103). When the detected temperature is equal to or smaller than the set temperature value, this field weakening current calculating process is terminated as the lack of the continuous rated output does not occur.

On the other hand, if the torque command value is larger than the set maximum value in step 101, the processor judges whether the correction value of the d-phase current reaches to a predetermined maximum value (Step 105). Next, when the correction value is less than the predetermined maximum value, the correction value of the d-phase current is increased by a given value (Step 106). Then, when the current command generator 4 generates the d-phase and q-phase current commands I_{DCMD} and I_{QCMD}, the processor of the servomotor control device adds the stored d-phase current correction value to the d-phase current command I_{DCMD} so as to prepare a corrected d-phase current command used for the feedback control of the d-phase current and a process of the d-phase controller 5. As shown in Fig. 3, the maximum torque is generally low at a high rotational speed. In the invention, however, the d-phase current command I_{DCMD} is increased by adding the increased correction value to the d-phase current command such that the maximum torque capable of being outputted by the servomotor is increased and the lack of the maximum torque does not occur.

In addition, when the correction value of the d-phase current is equal to or larger than the predetermined maximum value in the step 105, the processor terminates the process without increasing the correction value of the d-phase current.

When the detected temperature is larger than the set temperature value or the lack of the continuous rated output occurs in step 103, the process is progressed to step 104 and the d-phase current correction value is decreased by a given value. By the decrease of the d-phase current correction value, the d-phase current command value I_{DCMD} may be decreased or equal to zero, whereby the continuous rated torque may be increased, as shown in Fig. 3b.

Regarding the above process executed by the processor as the field weakening current calculating part 11 of the servomotor control device, the robot is commanded to carry out one cycle of taught motion and the processor determines the d-phase current correction value for each servomotor driving each of the axes of the robot, corresponding to the maximum torque and the continuous rated output in the one cycle of taught motion. After the d-phase current correction value is determined, the robot is commanded to carry out one cycle of motion again. During the one cycle, the d-phase current correction value is corrected and adjusted again by executing the process shown in Fig. 2, so as to optimize conditions of the servomotor and/or the robot.

In the servomotor for driving each of axes of the robot, the d-phase current correction value may be adjusted as described above. Therefore, the continuous rated output characteristic may be improved for one servomotor driving one axis on which gravity may effect and, the acceleration and deceleration characteristic may be improved for another servomotor driving another axis which gravity does not effect.

Regarding the constitution of the robot, servomotors having the same specification may be used for driving each of axes of the robot and, therefore, the same control devices may be used for the servomotors. The characteristic of each servomotor may be changed by the above field weakening control so as to adapt for the corresponding axis. As only one specification may be used for the servomotors and the hardware such as the control devices, manufacture, maintenance and control of the robot may become very easy.

The above effect may be obtained even if servomotors having the same specification are not used for all axes of the robot and, instead, the servomotors having the same specification are used for some of the axes, because the number of specifications of the servomotors used for the robot may be reduced.

Further, as the characteristic of a servomotor for driving each axis of a ready-made robot may be changed by the invention, the characteristic of the servomotor may be optimized corresponding to a taught motion of the robot.

Although the lack of maximum torque judging part 11a judges the lack of the maximum torque based on the torque command in the embodiment shown in Fig. 2, the lack of the maximum torque may be judged by the voltage command outputted in the current control loop, or, by the position error or the distance between the commanded position and the actual position of the servomotor, as described above.

In the former case, steps 100 and 101 of the process shown in Fig. 2 may be replaced with processes, in which: a compositional vector of the d-phase and q-phase voltage commands V_{DCMD} and V_{QCMD} outputted in the current control loop process by the d-phase and q-phase current controllers is calculated; and it is judged whether the compositional vector is equal to or larger than a maximum clamp value, in other words, the lack of the maximum torque occurs. Alternatively, the lack of the maximum torque may be judged by whether a positional voltage, calculated by converting the d-phase and q-phase voltage command to the three-phase voltage command using the converter 6 in Fig. 1b, is equal to or larger than a given clamp value. Also, the lack of the maximum torque may be judged by whether one voltage command value of the three-phase voltage command values is equal to or larger than a given clamp value.

In the latter case, the lack of the maximum torque may be judged by the position error. In this case, steps 100 and 101 of the process may be replaced with processes, in which: a position error of the servomotor calculated in a position loop process is read; and it is judged whether the read position error is equal to or larger than a set value, in other words, the lack of the maximum torque occurs.

In the embodiment shown in Fig. 2, the lack of continuous rated output judging part 11b judges the lack of the continuous rated output by the temperature of the servomotor, in steps 102 and 103 of the process. However, steps 102 and 103 may be replaced with processes, in which: current values Iu, Iv and Iw of the three-phase current are calculated by the actual current detected by the current detector 10u and 10v; a mean squared value (√((Iu², Iu², Iw²)/3)) is calculated; and it is judged whether the mean squared value is equal to or larger than a set value, in other words, the lack of the continuous rated output occurs.

The field weakening calculating part 11 or a margin calculating part 11c of the field weakening calculating part 11 may also calculate a margin regarding the maximum torque and/or the continuous rated output, by which the correction value of the field weakening current may be determined. The margin of maximum torque may be calculated by a torque limit value for limiting the torque command outputted by the speed controller 2 in the speed loop process (i.e., margin = torque limit value /maximum torque value). When the margin is small, the field weakening current correction value is increased.

Also, the margin of continuous rated output may be calculated by a mean squared value of the actual current relative to a rated torque value of the servomotor (i.e., margin = k · rated motor torque value / mean square value; where k is a coefficient). When the margin is small, the field weakening current correction value is decreased.

According to the present invention, the characteristics of maximum torque and continuous rated output of the servomotor may be improved by increasing or decreasing the field weakening current. Therefore, the characteristic of the servomotor may be optimized corresponding to the axis of the robot driven by the servomotor. In particular, the characteristic of continuous rated output may be improved for the servomotor for driving the axis on which gravity may effect, on the other hand, the characteristic of maximum torque may be improved for the servomotor for driving the axis required to have a high maximum torque on which gravity does not effect, so as to improve the characteristic of acceleration and deceleration of the servomotor. Further, the characteristic of the servomotor may be changed corresponding to a taught working motion of the robot.

Furthermore, hardware such as the control devices for the servomotors may be used in common by applying servomotors having the same specification to at least two axes, whereby manufacture, maintenance and control of the robot may become easy.

while the invention has been described with reference to specific embodiments chosen for the purpose of illustration, it should be apparent that numerous modifications could be made thereto, by one skilled in the art, without departing from the basic concept and scope of the invention.

## Claims

1. A servomotor control device for controlling a servomotor (M) driving each of axes of a robot, the servomotor control device comprising:
a current generating part (4) generating field weakening current for canceling a counter electromotive force generated by the servomotor (M); and
a field weakening current adjusting part (11, 12) for adjusting the magnitude of the field weakening current generated by the current generating part (4).

2. The servomotor control device as set forth in claim 1, further comprising:
a control part (20) commanding the robot to execute one cycle of taught motion; and
a lack of maximum torque judging part (11a) for judging lack of a maximum torque of the servomotor during the cycle,
wherein the field weakening current adjusting part (11, 12) increases the field weakening current when the lack of maximum torque judging part (11a) judges that the lack of the maximum torque occurs.

3. The servomotor control device as set forth in claim 2, wherein the lack of maximum torque judging part (11a) judges that the lack of the maximum torque occurs when a commanded torque value is equal to or more than a predetermined value.

4. The servomotor control device as set forth in claim 2, wherein the lack of maximum torque judging part (11a) judges that the lack of the maximum torque occurs when a commanded voltage value outputted in a current control loop is equal to, or more than, a maximum voltage value supplied by an inverter.

5. The servomotor control device as set forth in claim 2, wherein the lack of maximum torque judging part (11a) judges that the lack cf the maximum torque occurs when the distance between a commanded position and an actual position of the servomotor is equal to or more than a predetermined length.

6. The servomotor control device as set forth in claim 1, further comprising:
a control part (20) commanding the robot to execute one cycle of taught motion; and
a lack of continuous rated output judging part (11b) for judging lack of a continuous rated output of the servomotor during the cycle,
wherein the field weakening current adjusting part (11, 12) decreases the field weakening current when the lack of continuous rated output judging part (11b) judges that the lack of the continuous rated output occurs.

7. The servomotor control device as set forth in claim 6, further comprising a temperature sensor (S2) detecting temperature of the servomotor (M), wherein the lack of continuous rated output judging part (11b) judges that the lack of the continuous rated output occurs when an output value of the temperature sensor (S2) exceeds a predetermined value.

8. The servomotor control device as set forth in claim 6, wherein the lack of continuous rated output judging part (11b) judges that the lack of the continuous rated output occurs when a mean squared value of actual current in servomotor (M) exceeds a predetermined value.

9. The servomotor control device as set forth in claim 1, further comprising:
a control part (20) commanding the robot to execute one cycle of taught motion; and
a margin calculating part (11c) for calculating a torque margin of the maximum torque of the servomotor and an output margin of the continuous output relative to a rated motor output during the cycle,
wherein the field weakening current adjusting part (11, 12) increases the field weakening current when the torque margin calculated by the margin calculating part (11c) is small and decreases the field weakening current when the output margin calculated, by the margin calculating part (11c) is small, so as to optimize the field weakening current corresponding to the characteristic of the axes of the robot.

10. The servomotor control device as set forth in claim 9, wherein the margin calculating part (11c) calculates the torque margin based on a commanded maximum torque value during motion of the servomotor relative to a torque limit value for limiting the commanded torque value.

11. The servomotor control device as set forth in claim 9, wherein the margin calculating part (11c) calculates the output margin based on a mean squared value of the torque values of the axes of the robot during motion of the servomotor relative to a rated torque of the servomotor (M).

12. A robot comprising servomotors as drive units for at least two axes of the robot, the servomotors having the same specification and being controlled by the servomotor control device as set forth in any preceding claims.
